# EUROPÄISCHE PATENTSCHRIFT

(11) **EP 0 638 150 B1**
(45) Veröffentlichungstag und Bekanntmachung des Hinweises auf die Patenterteilung: **11.12.1996**
(21) Anmeldenummer: 93906514.0
(22) Anmeldetag: 13.03.1993
(51) Int. Cl.: F16F 9/46, B60G 17/08

(54) **VORGESTEUERTES VENTIL FÜR FAHRWERKSREGELUNGSSYSTEME**
PILOT OPERATED VALVE FOR RUNNING GEAR REGULATING SYSTEMS
SOUPAPE A PILOTE POUR SYSTEMES DE COMMANDE DE MECANISMES DE ROULEMENT

(30) Priorität: 27.04.1992 DE 4113803
(43) Veröffentlichungstag der Anmeldung: 15.02.1995
(73) Patentinhaber: ITT Automotive Europe GmbH, 60488 Frankfurt (DE)
(72) Erfinder: FEIGEL, Hans-Jörg, D-6365 Rosbach v.d.H. (DE)
(86) Internationale Anmeldenummer: EP9300576
(87) Internationale Veröffentlichungsnummer: WO9322582

(56) Entgegenhaltungen:
- EP-A- 0 200 446
- EP-A- 0 368 321
- EP-A- 0 400 395
- EP-A- 0 440 943
- WO-A-89/09891
- DE-A- 3 927 150
- DE-C- 3 719 113
- DE-C- 3 807 322
- FR-A- 2 596 124
- US-A- 4 491 207

## Beschreibung

Die Erfindung betrifft ein vorgesteuertes Ventil für Fahrwerksregelungssysteme mit einem Ventilgehäuse, einem darin angeordneten Ventilkörper, der eine zwischen einem ersten und einem zweiten hydraulischen Raum ausgebildete erste hydraulische Verbindung steuert, sowie mit einer zweiten hydraulischen Verbindung, die durch einen ersten Drosselquerschnitt, einen Vorsteuerraum und einen variablen zweiten Drosselquerschnitt gebildet ist, der durch einen mittels eines elektromechanischen Wandlers stufenlos positionierbaren, mit dem Ventilkörper zusammenwirkenden Vorsteuerkörper gesteuert wird.

Ein derartiges Ventil ist z.B. aus der DE-PS 37 19 113 bekannt. Das vorbekannte Ventil, das bei einem regelbaren Schwingungsdämpfer als Dämpferventil zur Verstellung seiner Dämpfungskraft Verwendung findet, besteht im wesentlichen aus einer Hauptstufe, die durch einen mit einem Dichtsitz zusammenwirkenden, einem ersten konstanten Drosselquerschnitt aufweisenden Ventilkörper gebildet ist, sowie einer Vorsteuerstufe, die als ein im Ventilkörper ausgebildeter zweiter Drosselquerschnitt ausgeführt ist, sowie durch eine mittels eines elektromechanischen Wandlers betätigbare Steuernadel stufenlos gesteuert wird.

Als nachteilig sind bei dem vorbekannten Ventil vor allem seine erhebliche Baulänge sowie der für seine Herstellung erforderliche Bauaufwand anzusehen. Des weiteren kann auch das dynamische Verhalten des vorbekannten Ventils als unzureichend bezeichnet werden, so daß ein derartiges Ventil für den Einsatz in Fahrwerksregelungssystemen weniger geeignet ist.

Es ist daher Aufgabe der vorliegenden Erfindung ein vorgesteuertes Ventil der eingangs genannten Art vorzuschlagen, dessen Aufbau eine Verringerung der Baulänge sowie eine erhebliche Reduzierung von Fertigungskosten ermöglicht. Gleichzeitig soll das dynamische Verhalten des Ventils sowie seine Funktion in Teilbereichen (Mindestöffnungsdruck für die Hauptstufe) verbessert werden.

Diese Aufgabe wird erfindungsgemäß dadurch gelöst, daß der Vorsteuerkörper ringförmig so ausgebildet ist, daß ein Abströmen aus dem Vorsteuerraum in radialer Richtung erfolgt, und daß der Ventilkörper als eine federnd aufgehängte Platte ausgeführt ist. Ein derart aufgebautes Ventil baut sehr kompakt. Sein hervorragendes dynamisches Verhalten ist auf die ringförmige Ausführung des Vorsteuerkörpers zurückzuführen, die eine Freigabe großer Strömungsquerschnitte ermöglicht.

Eine Erhöhung der Funktionssicherheit wird bei einer vorteilhaften Weiterbildung dadurch erreicht, daß der Vorsteuerkörper auf einem im Ventilgehäuse fest angeordneten vorzugsweise zylindrischen Führungsteil geführt ist.

Vorteilhaft ist auch, wenn im Führungsteil radiale Druckentlastungsnuten vorgesehen sind, die in einem zwischen dem Vorsteuerkörper und dem Führungsteil ausgebildeten Spalt münden. Durch diese Maßnahme wird der Effekt des hydraulischen Klemmens in diesem Bereich verhindert.

Eine vorteilhafte Weiterbildung der Erfindung zeichnet sich dadurch aus, daß der Ventilkörper eine einen axialen zylindrischen Fortsatz des Führungsteils aufnehmende Öffnung aufweist, wobei der erste Drosselquerschnitt durch den zwischen dem Ventilkörper und dem Fortsatz begrenzten Ringspalt gebildet ist.

Eine Vereinfachung der Fertigung des erfindungsgemäßen Ventils wird bei einer anderen Ausgestaltung des Erfindungsgegenstandes dadurch erreicht, daß der erste Drosselquerschnitt durch eine im Ventilkörper ausgebildete, vorzugsweise zentral angeordnete Öffnung gebildet ist.

Eine einwandfreie Versorgung des zwischen dem Vorsteuerkörper und dem Führungsteil ausgebildeten Spaltes mit gefiltertem Druckmittel wird bei einer weiteren Ausführung des Erfindungsgegenstandes dadurch erreicht, daß dem ersten Drosselquerschnitt ein Filterelement vorgeschaltet ist. Dadurch wird ein Funktionsausfall durch die in diesem Bereich drohende Verschmutzungsgefahr weitgehend eliminiert.

Nach einem weiteren vorteilhaften Merkmal der Erfindung ist der radial außenliegende ringförmige Randbereich der Platte als Biegefeder ausgebildet. Die einteilige Ausführung des Ventilkörpers mit seiner Aufhängung bzw. Lagerung ermöglicht eine einfache Realisierung einer Feder ohne Vorspannung mit hoher Steifigkeit.

Um zu gewährleisten, daß die Funktion des erfindungsgemäßen Ventils auch bei einem Ausfall des elektromechanischen Wandlers weiterhin aufrechterhalten wird (sog. Fail-Safe-Funktion), sieht eine weitere Ausgestaltung des Erfindungsgegenstandes vor, daß der Vorsteuerkörper auf einer Biegefeder aufgehängt ist, die im Ventilgehäuse eingespannt ist. Diese Maßnahme ist insbesondere in Verbindung mit bidirektionalen Wandlern sinnvoll. Die Biegefeder kann beispielsweise als eine mit Durchlässen versehene Federscheibe ausgebildet sein.

Die Verschmutzungsgefahr wird bei einer weiteren Ausführung des erfindungsgemäßen Ventils noch weiter dadurch reduziert, daß im Bereich des ersten Drosselquerschnitts eine Ringnut vorgesehen ist.

Bei einer weiteren vorteilhaften Ausgestaltung des Erfindungsgegenstandes ist vorgesehen, daß die Platte sowohl im Wirkungsbereich eines die erste hydraulische Verbindung steuernden Dichtsitzes als auch im Wirkungsbereich des Vorsteuerkörpers ringförmige Vorsprünge aufweist. Diese Aufnahme ermöglicht eine Realisierung einer progressiven Durchflußkennlinie, die zur Stabilisierung des Ventilverhaltens beiträgt.

Eine sehr wirksame Dichtwirkung der Vorsteuerstufe wird bei einer weiteren Ausführung der Erfindung dadurch erreicht, daß der mit dem Ventilkörper zusammenwirkende Bereich des Vorsteuerkörpers eine Steuerkante bildet, die im Querschnitt dreieckförmig ausgebildet ist.

Ein Einsatz des erfindungsgemäßen Ventils als Druckbegrenzungsventil wird dadurch erreicht, daß der mit dem Ventilkörper zusammenwirkende Bereich des Vorsteuerkörpers eine mit dem im Vorsteuerraum herrschenden Druck beaufschlagte Fläche aufweist, während seine Verwendung als Drosselventil dadurch ermöglicht wird, daß der Vorsteuerkörper druckausgeglichen ist.

Um auf eine einfache, kostengünstige Art zu gewährleisten, daß am Vorsteuerkörper im Betrieb kein Druckausgleich stattfindet, sieht eine vorteilhafte Weiterbildung des Efindungsgegenstandes vor, daß ein mit dem Vorsteuerkörper zusammenwirkendes, vorzugsweise zylindrisches Teil vorgesehen ist, dessen Stirnfläche mit dem im Vorsteuerraum herrschenden Druck beaufschlagbar ist. Die druckbeaufschlagte Fläche des zylindrischen Teiles kann dabei mit größeren Toleranzen realisiert werden.

Eine weitere Verbesserung des dynamischen Verhaltens des erfindungsgemäßen Ventils wird bei einer anderen vorteilhaften Ausführungsvariante dadurch erreicht, daß der elektromagnetische Wandler durch eine mit einem Permanentmagneten zusammenwirkende Tauchspule gebildet ist, deren Träger den Vorsteuerkörper bildet. Außerdem wird dadurch eine Reduzierung der erforderlichen Zahl der Bauteile erreicht.

Eine weitere vorteilhafte Ausführungsvariante des Erfindungsgegenstandes zeichnet sich dadurch aus, daß der elektromechanische Wandler als ein bidirektional wirkender Linearmotor ausgeführt ist, dessen Anker hülsenförmig ausgebildet und in einer Gleitbuchse so gelagert ist, daß zwischen seinen Enden und dem Führungsteil bzw. einer das Ventilgehäuse verschließenden Polplatte Axialluftspalte ausgebildet sind. In dem vom Anker radial begrenzten Raum sind zwei durch einen Polschuh voneinander getrennte, axial magnetisierte Permanentmagnete angeordnet, von denen der eine an der Polplatte und der andere am Führungsteil anliegt, wobei zwischen dem Polschuh und dem Anker ein Radialluftspalt ausgebildet ist. Durch diese Maßnahmen sind höhere Betätigungskräfte realisierbar, so daß der Störkrafteinfluß reduziert wird. Durch die hülsenförmige Ausführung des Ankers wird auf Grund ihrer geringen Masse ein günstiges dynamisches Verhalten erreicht, wobei die kurze Führungslänge des Ankers eine besonders kompakte Ausführung des erfindungsgemäßen Ventils ermöglicht.

Eine Linearisierung der Kraft-Hub-Charakteristik kann nach einem weiteren Erfindungsmerkmal dadurch erreicht werden, daß die Axialluftspalte in radialer Richtung stufenförmig gestaltet sind.

Bei einer weiteren vorteilhaften Ausgestaltung des Erfindungsgegenstandes ist der Anker mit dem Vorsteuerkörper mittels durch das Führungsteil hindurch sich erstreckender Verbindungsstifte verbunden. Dadurch treten bei dieser Ausführung lediglich geringe Störungen des magnetischen Flusses auf.

Eine besonders kostengünstig herstellbare Ausführung des bidirektional wirkenden elektromechanischen Wandlers wird nach einem weiteren Erfindungsmerkmal dadurch erreicht, daß der elektromechanische Wandler als Doppelhubmagnet ausgeführt ist, dessen Anker mit ihn radial umgreifenden Spulen, je einer Polplatte sowie einem dazwischen angeordneten Polschuh zusammenwirkt, die in axialer Richtung nebeneinander angeordnet sind.

Eine erhebliche Erhöhung der Energiedichte wird bei einer anderen Ausführungsvariante dadurch erreicht, daß die Spulen zwei axial entgegengesetzt magnetisierte, ringförmige Permanentmagnete radial umgreifen, wobei der Anker zwischen den Permanentmagneten angeordnet ist. Diese Maßnahme ermöglicht eine Verringerung des erforderlichen Bauraumes.

Eine bessere Ausnutzung des vorhandenen Bauraumes bei gleichzeitiger Reduzierung der bewegten Masse erfolgt bei einer vorteilhaften Weiterbildung des Erfindungsgegenstandes dadurch, daß der elektromechanische Wandler als Doppelhubmagnet ausgeführt ist, dessen Anker als eine zylindrische Hülse ausgebildet ist, wobei die Anordnung seiner Spulen derart getroffen ist, daß die eine Spule radial außerhalb und die andere Spule radial innerhalb der Hülse angeordnet sind.

Eine günstige, insbesondere reibungsarme Lagerung des als Vorsteuerkörper dienenden Ankers wird dabei dadurch erreicht, daß die Hülse an ihren Enden mit dem Führungsteil bzw. einer mit der radial innenliegenden Spule zusammenwirkenden Polplatte Axialluftspalte bildend, auf einer Biegefeder aufgehängt ist. Um die magnetischen Verluste zu minimieren ist, ist die Hülse zwischen an den Spulen radial anliegenden Polkernen angeordnet und bildet mit ihnen Radialluftspalte.

Eine Einbindung des erfindungsgemäßen Ventils in einen Lageregelkreis wird bei einer vorteilhaften Ausgestaltung der Erfindung dadurch ermöglicht, daß der Vorsteuerkörper mit einer Meßeinrichtung gekoppelt ist, die seinen Betätigungsweg erfaßt. Dadurch kann eine weitere Erhöhung der Dynamik bei gleichzeitiger Reduzierung der Hysterese erreicht werden.

Der Vorsteuerkörper ist dabei vorzugsweise mit der Meßeinrichtung mittels des vorhin erwähnten zylindrischen Teiles gekoppelt, so daß die Wirkung der magnetischen Störeinflüsse auf die außerhalb des elektromechanischen Wandlers angeordnete Meßeinrichtung minimiert wird.

Eine kostengünstig herstellbare, bauraumsparende Ausführung der Erfindung zeichnet sich dadurch aus, daß die Meßeinrichtung Änderungen von magnetischen Größen erfaßt, die durch die Verstellung des Vorsteuerkörpers hervorgerufen werden.

Dabei kann die Meßeinrichtung vorzugsweise durch einen am Vorsteuerkörper bzw. einem mit ihm verbundenen Teil angebrachten Permanentmagneten sowie ein die Änderungen seines Magnetfeldes registrierendes Sensorelement gebildet sein.

Eine andere vorteilhafte Weiterbildung des Erfindungsgegenstandes, die insbesondere für den Einsatz bei höheren Temperaturen geeignet ist, sieht vor, daß das Sensorelement durch ein magnetoresistives Element gebildet ist. Das Sensorelement kann allerdings auch durch ein Hallelement gebildet sein.

Eine unabhängig vom Einfluß äußerer Magnetfelder zuverlässig arbeitende Meßeinrichtung wird beispielsweise durch eine Reflexlichtschranke gebildet.

Eine robuste, gegen Verschmutzung unempfindliche Meßeinrichtung kann als eine nach dem Wirbelstromprinzip arbeitende Anordnung ausgebildet sein.

Weitere Einzelheiten, Merkmale und Vorteile der Erfindung gehen aus der nachfolgenden Beschreibung von zwei Ausführungsbeipielen unter Bezugnahme auf die beiliegende Zeichnung, in der für einander entsprechende Einzelteile gleiche Bezugszeichen verwendet werden. Es zeigen:
- Fig. 1: eine erste Ausführung des erfindungsgemäßen vorgesteuerten Ventils, das als Dämpferventil eines regelbaren Schwingungsdämpfers eingesetzt wird, in schematischer Schnittdarstellung;
- Fig. 2: das erfindungsgemäße Ventil nach Fig. 1 in größerem Maßstab;
- Fig. 3: eine zweite Ausführung des erfindungsgemäßen vorgesteuerten Ventils in größerem Maßstab;
- Fig. 4: eine zweite bis fünfte Variante des bei dem
- bis Fig. 7: erfindungsgemäßen Ventil verwendbaren elektromechanischen Wandlers.

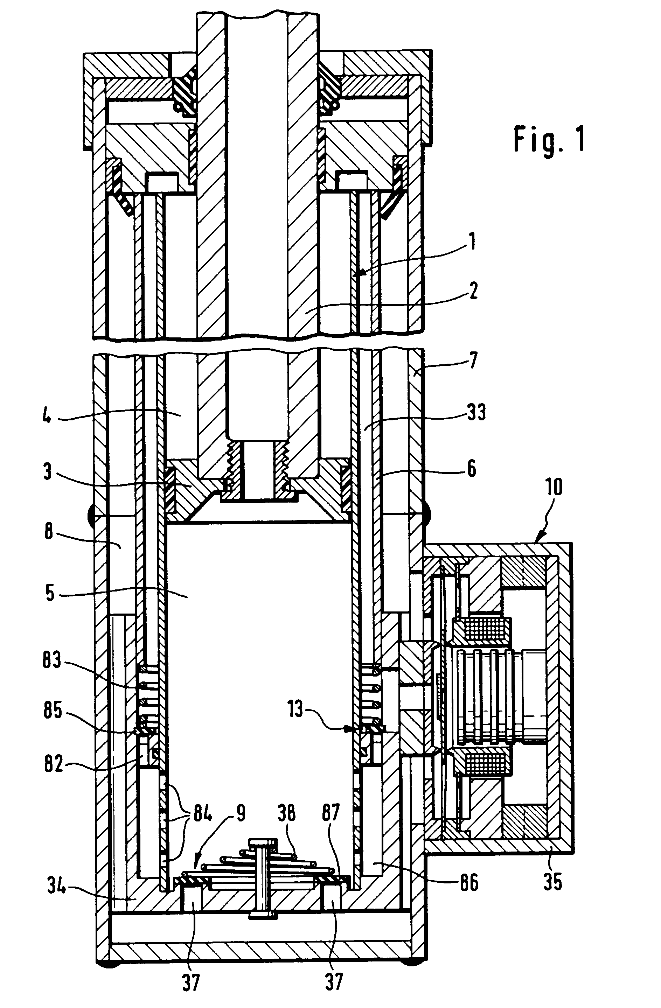

Der in Fig. 1 schematisch dargestellte regelbare Schwingungsdämpfer weist einen Arbeitszylinder 1 sowie ein zum Arbeitszylinder 1 koaxial angeordnetes Rohr 6 auf, so daß dazwischen ein Verbindungskanal 33 gebildet wird. Koaxial zum Arbeitszylinder 1 bzw. dem Rohr 6 ist weiter ein Außenrohr 7 angeordnet, das mit dem Rohr 6 einen teilweise mit Öl gefüllten, mit dem Verbindungskanal 33 zusammenwirkenden Ausgleichsraum 8 mit einem Kreisringquerschnitt begrenzt. Der Innenraum des Arbeitszylinder 1 ist mittels eines durch eine hohle Kolbenstange 2 verschiebbaren Kolbens 3 in eine oberhalb des Kolbens 3 ausgebildete erste Arbeitskammer 4 sowie eine unterhalb des Kolbens 3 ausgebildete zweite Arbeitskammer 5 unterteilt.

Im Bodenbereich des gezeigten Schwingungsdämpfers befindet sich eine näher nicht bezeichnete Ventilbaugruppe, die im wesentlichen aus einem in der Zugstufe wirksamen Rückschlagventil 9, einem in der Druckstufe wirksamen, vorzugsweise durch ein zweites Rückschlagventil gebildeten Schaltventil 13 sowie einem in seiner Gesamtheit mit dem Bezugszeichen 10 versehenen steuerbaren Dämpferventil besteht. Die beiden Rückschlagventile 9,13 sind dabei vorzugsweise in einem Gehäuse 34 angeordnet, das gleichzeitig das Dämpferventil 10 aufnimmt.

Das erste Rückschlagventil 9 besteht aus einer durch eine Feder 38 vorgespannten Ventilscheibe 87, die mit im Gehäuse 34 vorgesehenen Durchlässen 37 zusammenwirkt und in der Zugstufe ein Nachsaugen des Öls aus dem Ausgleichsraum 8 in die zweite Arbeitskammer 5 ermöglicht. Das mit dem in der zweiten Arbeitskammer 5 herrschenden Druck beaufschlagbare Schaltventil bzw. zweite Rückschlagventil 13 wird durch eine mittels einer Feder 83 vorgespannte, radial außerhalb des Arbeitszylinders 1 angeordnete Ventilscheibe 85 gebildet, die mit im Gehäuse 34 ausgebildeten, axial verlaufenden Durchlässen 82 zusammenwirkt. Der Arbeitszylinder 1 ist in seinem unteren Bereich (in der unteren Hubendlage des Kolbens 3) mit Öffnungen 84 versehen, die ganz oder teilweise vom Kolben 3 überfahren werden können. Diese Öffnungen 84 münden in einem Ringraum 86, der radial (und axial von unten) durch das Gehäuse 34 und axial vom zweiten Rückschlagventil 13 begrenzt ist.

Das als ein zweistufiges Sitzventil ausgeführte Dämpferventil 10 ist in einem einen Teil des Gehäuses 34 bildenden Ventilgehäuse 35 vorzugsweise senkrecht zur Schwingungsdämpfer-Längsachse angeordnet und dient zur Änderung des Durchflußquerschnittes der Verbindung zwischen dem Verbindungskanal 33 und dem Ausgleichsraum 8.

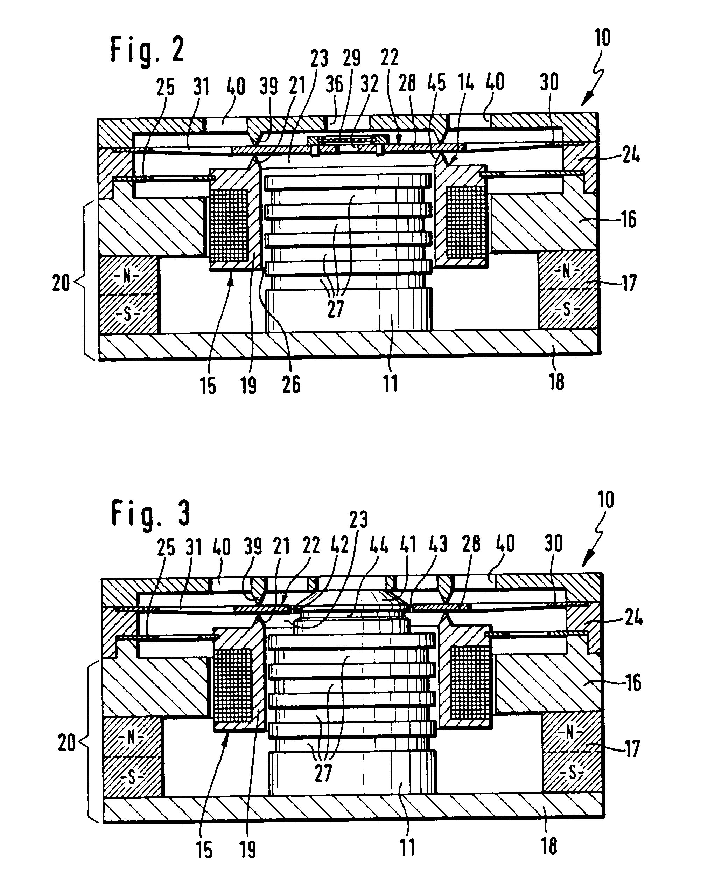

Wie insbesondere der Fig. 2 zu entnehmen ist, weist das Dämpferventil 10 ein im wesentlichen zylindrisches Führungsteil 11 auf, auf dem ein vorzugsweise hülsenförmiger Vorsteuerkörper 14 geführt wird, der den Träger 19 einer elektrischen Tauchspule 15 bildet, die zusammen mit einem ringförmigen Polschuh 16, einem Permanentmagneten 17 sowie einer am Permanentmagneten 17 anliegenden Bodenplatte 18, einen elektromechanischen Wandler 20 bilden. Der eine im Querschnitt dreieckförmig ausgebildete Steuerkante 21 bildende Bereich des ringförmigen Vorsteuerkörpers 14 wirkt mit einem Ventilkörper 22 zusammen, so daß zwischen dem Führungsteil 11 und dem Führungskörper 22 ein von der Steuerkante 21 begrenzter Vorsteuerraum 23 gebildet ist. Der Ventilkörper 22 ist dabei vorzugsweise als eine Platte 28 ausgeführt, deren mit Durchbrüchen 31 versehener radial außenliegender ringförmiger Bereich als eine Biegefeder 30 ausgebildet ist, die in einem am Polschuh 16 anliegenden Deckel 24 eingespannt ist. Der sowohl eine als Eingangskanal dienende, zentral angeordnete Öffnung 36 als auch mindestens zwei radial versetzt angeordnete, Ausgangskanäle bildende Öffnungen 40 aufweisende Deckel 24 weist auf seiner dem Ventilkörper 22 zugewandten Seite eine vorzugsweise im Querschnitt dreieckförmig ausgebildete ringförmige Erhebung 39 auf, die, einen Dichtsitz bildend, am Ventilkörper 22 anliegt. Wie insbesondere der Fig. 1 zu entnehmen ist, steht die Öffnung 36 im montierten Zustand des erfindungsgemäßen Ventils 10 in Verbindung mit dem Verbindungskanal 33, während die Öffnungen 40 im Ausgleichsraum 8 münden. Der Ventilkörper 22 ist vorzugsweise in seiner Mitte mit einer Öffnung 32 versehen, der ein Filterelement 29 vorgeschaltet ist und die einen ersten, konstanten Drosselquerschnitt bildet, während ein zweiter, variabler Drosselquerschnitt durch den bei Bestromen der Tauchspule 15 frei werdenden Ringspalt zwischen der Steuerkante 21 des Vorsteuerkörpers 14 und dem Ventilkörper 22 gebildet ist. Der Vorsteuerkörper 14 ist dabei vorzugsweise auf einer scheibenförmigen Biegefeder 25 aufgehängt, die an ihrem Außenrand zwischen dem Deckel 24 und dem Polschuh 16 eingespannt ist. Das Führungsteil 11 und der Ventilkörper 14 sind so ausgelegt, daß zwischen ihnen ein radialer Spalt 26 ausgebildet ist. In diesem Spalt 26 münden mehrere auf der Oberfläche des Führungsteiles 11 nebeneinander angeordnete Druckentlastungsnuten 27. Soll das erfindungsgemäße Ventil als Druckbegrenzungsventil eingesetzt werden, so ist es sinnvoll, wenn der an dem Ventilkörper 22 anliegende Bereich des Vorsteuerkörpers 14 eine Fläche 45 aufweist, die der Wirkung des im Vorsteuerraum 23 herrschenden hydraulischen Druckes ausgesetzt ist. Bei einer Verwendung des erfindungsgemäßen Ventils als Drosselventil ist der Vorsteuerkörper 14 durckausgeglichen. Die den Ventilkörper 22 bildende Platte 28 kann auf beiden Seiten im Wirkungsbereich des Dichtsitzes 39 sowie der Steuerkante 36 des Vorsteuerkörpers 14 mit nicht gezeigten ringförmigen Vorsprüngen versehen sein, die eine Realisierung einer das Ventilverhalten stabilisierenden progressiven Durchflußkennlinie ermöglichen.

Bei der in Fig. 3 gezeigten zweiten Ausführungsvariante des erfindungsgemäßen Ventils weist das Führungsteil 11 einen axialen zylindrischen Fortsatz 41 auf, der in eine im Ventilkörper 22 ausgebildete, zentral angeordnete Öffnung 42 mit radialem Spiel hineinragt, so daß dazwischen ein Ringpalt 43 gebildet wird, der den im Zusammenhang mit Fig. 2 erwähnten ersten Drosselquerschnitt bildet. Außerdem ist es sinnvoll, im Bereich des ersten Drosselquerschnitts (43) eine Ringnut 44 vorzusehen, die dem "Freiblasen" der Drossel von vor dem Vorsteuerraum 23 angesammelten Schmutzpartikeln dient.

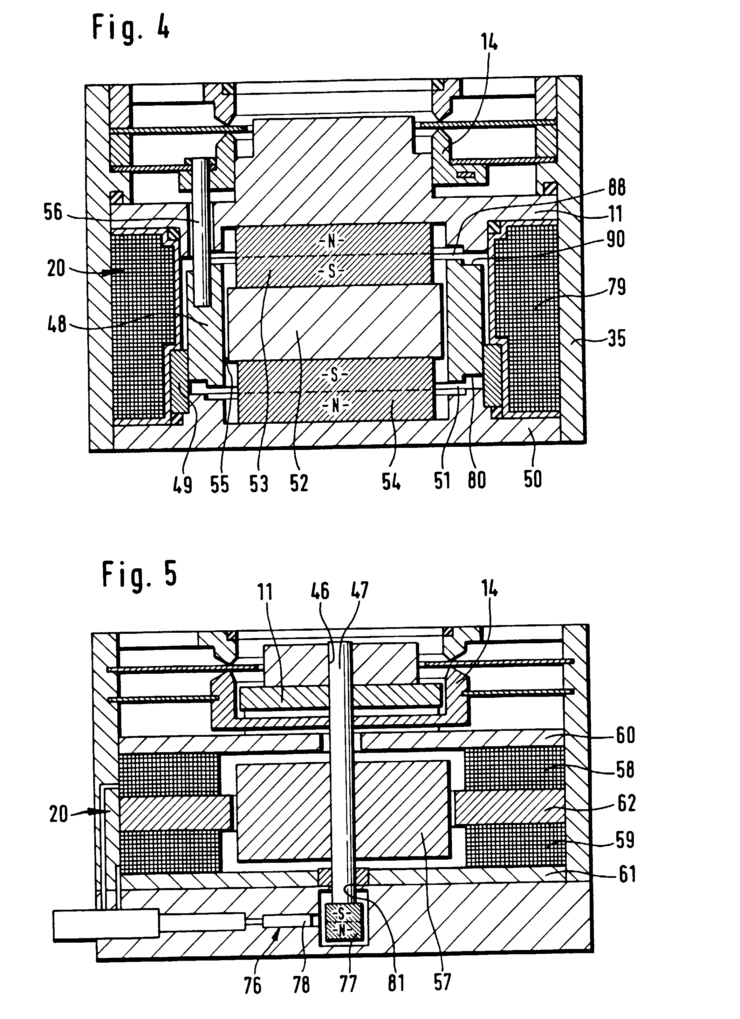

Bei der in Fig. 4 gezeigten dritten Ausführungsvariante der Erfindung ist der elektromechanische Wandler 20 als ein bidirektional wirkender Linearmotor ausgebildet, der im wesentlichen aus einer elektrischen Spule 79 sowie einem innerhalb der Spule 79 axial beweglichen angeordneten Anker 48 besteht. Der vorzugsweise hülsenförmig ausgeführte Anker 48 wird an seinem dem Vorsteuerkörper 14 abgewandten Ende in einer Gleitbuchse 49 geführt, wobei seine axiale Baulänge so bemessen ist, daß zwischen seinen stufenförmig gestalteten Stirnflächen 80,90 und dem Führungsteil 11 bzw. einer an der Spule 79 axial anliegenden Polplatte 50 Axialluftspalte 51,88 ausgebildet sind. Die Übertragung der Betätigungskraft auf den Vorsteuerkörper 14 erfolgt dabei durch im Führungsteil 11 mit radialem Spiel geführte Verbindungsstifte 56. Der hülsenförmige Anker 48 begrenzt zusammen mit dem Führungsteil 11 sowie der Polplatte 50 einen zylindrischen Raum, in dem zwei in entgegengesetzter Richtung axial magenetisierte Permanentmagnete 53,54 angeordnet sind, die durch einen Polschuh 52 voneinander getrennt sind. Der Durchmesser des Polschuhs 52 ist dabei vorzugsweise so ausgewählt, daß zwischen ihm und dem Anker 48 ein Radialluftspalt 55 ausgebildet ist.

Bei dem in Fig. 5 gezeigten Ausführungsbeispiel ist der elektromagnetische Wandler 20 als ein Doppelhubmagnet ausgeführt, der aus einem mittig angeordneten Anker 57 sowie zwei den Anker 57 radial umgreifenden elektrischen Spulen 58,59 besteht. Die Spulen 58,59 liegen dabei einerseits an je einer Polplatte 60,61 und andererseits an einem zwischen ihnen angeordneten ringförmigen Polschuh 62 an. Der Anker 57 wird von einem mit dem Vorsteuerkörper 14 gekoppelten zylindrischen Teil 47 getragen, dessen Stirnfläche der Wirkung des im Vorsteuerraum 23 herrschenden hydraulischen Druckes ausgesetzt ist. Das zylindrische Teil 47 kann beispielsweise in im Führungsteil 11 sowie in der unteren Polplatte 61 vorgesehenen Bohrungen 46,81 geführt werden.

Um bei dem in Fig. 1 gezeigten Schwingungsdämpfer ein gewünschtes Kennlinienfeld, d.h. die Abhängigkeit des im Schwingungsdämpfer herrschenden hydraulischen Druckes von dem durch das Dämpferventil 10 fließenden Volumenstrom bei verschiedenen Werten des den elektromechanischen Wandler ansteuernden Erregerstromes zu erreichen ist es erforderlich, den Betätigungsweg des Vorsteuerkörpers 14 zu sensieren. Zu diesem Zweck ist unmittelbar mit dem Vorsteuerkörper 14 eine Meßeinrichtung 76 gekoppelt, die durch Bewegung des Vorsteuerkörpers 14 hervorgerufene Änderungen eines Magnetfeldes erfaßt. Die in Fig. 5 gezeigte Meßeinrichtung 76 besteht aus einem am zylindrischen Teil 47 befestigten Permanentmagneten 77 sowie einem mit ihm zusammenwirkenden Sensorelement 78, beispielsweise einem Hall- oder einem magnetoresistiven Element. Denkbar sind jedoch auch andere Ausführungsformen der Meßeinrichtung, die z.B. durch eine Reflexlichtschranke gebildet sein oder nach dem Wirbelstromprinzip arbeiten kann.

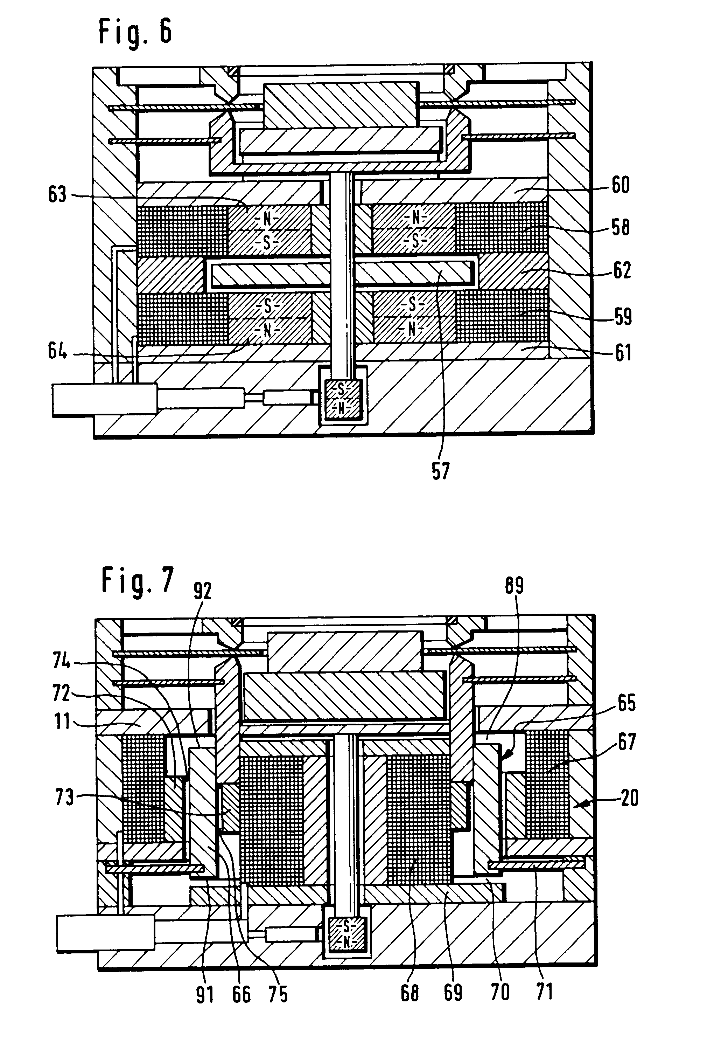

Bei dem in Fig. 6 dargestellten Ausführungsbeispiel ist der elektromechanische Wandler 20 als sogenannter Force-Motor ausgeführt, bei dem die im Zusammenhang mit Fig. 5 erwähnten Spulen 58,59 zwei entgegengesetzt magnetisierte, ringförmige Permanentmagnete 63,64 radial umgreifen. Der scheibenförmig ausgeführte Anker 57 befindet sich dabei in einem von den Spulen 58,59, den Permanetmagneten 63,64 bzw. dem Polschuh 62 begrenzten Raum.

Der bei der in Fig. 7 gezeigten Ausführungsform verwendete elektromechanische Wandler 20 ist schließlich als ein Doppelhub-Elektromagnet ausgeführt, der einen Anker 65 aufweist, der durch eine auf einer Biegefeder 71 aufgehängte gestufte zylindrische Hülse 66 gebildet ist. Das Spulensystem des Doppelhubmagneten wird durch zwei Spulen 67,68 gebildet, deren Anordnung vorzugsweise derart getroffen ist, daß die radial außenliegende erste Spule 67 größeren Druchmessers den hülsenförmigen Anker 65 bzw. 66 radial umgreift, während die zweite Spule 68 kleineren Durchmessers innerhalb der Hülse 66 angeordnet ist. Die beiden Spulen 67,68 wirken mit je einem ringförmigen Polkern 72,73 zusammen, wobei zwischen dem Polkern 72 und der Hülse 66 ein erster Radialluftspalt 74 und zwischen dem Polkern 73 und der Hülse 66 ein zweiter Radialluftspalt 75 ausgebildet sind. Die axiale Länge des Ankers 65 ist dabei so bemessen, daß zwischen seinen Stirnflächen 91,92 und dem Führungsteil 11 bzw. einer mit der zweiten Spule 68 zusammenwirkenden Polplatte 69 Axialluftspalte 70,89 ausgebildet sind.

### Bezugszeichenliste

- 1: Arbeitszylinder
- 2: Kolbenstange
- 3: Kolben
- 4: Arbeitskammer
- 5: Arbeitskammer
- 6: Rohr
- 7: Außenrohr
- 8: Ausgleichsraum
- 9: Rückschlagventil
- 10: Dämpferventil
- 11: Führungsteil
- 12: Strömungsquerschnitt
- 13: Schaltventil/Rückschlagventil
- 14: Ventilkörper
- 15: Tauchspule
- 16: Polschuh
- 17: Permanentmagnet
- 18: Bodenplatte
- 19: Träger
- 20: Wandler
- 21: Steuerkante
- 22: Ventilkörper
- 23: Vorsteuerraum
- 24: Deckel
- 25: Biegefeder
- 26: Spalt
- 27: Druckentlastungsnut
- 28: Platte
- 29: Filterelement
- 30: Biegefeder
- 31: Durchbruch
- 32: Öffnung
- 33: Verbindungskanal
- 34: Gehäuse
- 35: Ventilgehäuse
- 36: Öffnung
- 37: Durchlaß
- 38: Feder
- 39: Erhebung
- 40: Öffnung
- 41: Fortsatz
- 42: Öffnung
- 43: Drosselquerschnitt
- 44: Ringnut
- 45: Fläche
- 46: Bohrung
- 47: Teil
- 48: Anker
- 49: Gleitbuchse
- 50: Polplatte
- 51: Axialluftspalt
- 52: Polschuh
- 53: Permanentmagnet
- 54: Permanentmagnet
- 55: Radialluftspalt
- 56: Verbindungsstift
- 57: Anker
- 58: Spule
- 59: Spule
- 60: Polplatte
- 61: Polplatte
- 62: Polschuh
- 63: Permanentmagnet
- 64: Permanentmagnet
- 65: Anker
- 66: Hülse
- 67: Spule
- 68: Spule
- 69: Polplatte
- 70: Axialluftspalt
- 71: Biegefeder
- 72: Polkern
- 73: Polkern
- 74: Radialluftspalt
- 75: Radialluftspalt
- 76: Meßeinrichtung
- 77: Permanentmagnet
- 78: Sensorelement
- 79: Spule
- 80: Stirnfläche
- 81: Bohrung
- 82: Durchlaß
- 83: Feder
- 84: Öffnung
- 85: Ventilscheibe
- 86: Ringraum
- 87: Ventilscheibe
- 88: Axialluftspalt
- 89: Axialluftspalt
- 90: Stirnfläche
- 91: Stirnfläche
- 92: Stirnfläche

## Patentansprüche

1. Vorgesteuertes Ventil (10) für Fahrwerksregelungssysteme mit einem Ventilgehäuse (35), einem darin angeordneten Ventilkörper (22), der eine zwischen einem ersten (8) und einem zweiten hydraulischen Raum (33) ausgebildete erste hydraulische Verbindung steuert, sowie mit einer zweiten hydraulischen Verbindung, die durch einen ersten Drosselquerschnitt (32), einen Vorsteuerraum (23) und einen variablen zweiten Drosselquerschnitt (21,22) gebildet ist, der durch einen mittels eines elektromechanischen Wandlers (20) stufenlos positionierbaren, mit dem Ventilkörper (22) zusammenwirkenden Vorsteuerkörper (14) gesteuert wird, dadurch **gekennzeichnet**, daß der Vorsteuerkörper (14) ringförmig so ausgebildet ist, daß ein Abströmen aus dem Vorsteuerraum (23) in radialer Richtung erfolgt, und daß der Ventilkörper (22) als eine federnd aufgehängte Platte (28) ausgeführt ist.

2. Vorgesteuertes Ventil nach Anspruch 1, dadurch **gekennzeichnet**, daß der Vorsteuerkörper (14) auf einem im Ventilgehäuse (35) fest angeordneten vorzugsweise zylindrischen Führungsteil (11) geführt ist.

3. Vorgesteuertes Ventil nach Anspruch 2, dadurch **gekennzeichnet,** daß im Führungsteil (11) radiale Druckentlastungsnuten (27) vorgesehen sind, die in einem zwischen dem Vorsteuerkörper (14) und dem Führungsteil (11) ausgebildeten Spalt (26) münden.

4. Vorgesteuertes Ventil nach Anspruch 2 oder 3, dadurch **gekennzeichnet**, daß der Ventilkörper (22) eine einen axialen zylindrischen Fortsatz (41) des Führungsteils (11) aufnehmende Öffnung (42) aufweist, wobei der erste Drosselquerschnitt durch den zwischen dem Ventilkörper (22) und dem Fortsatz (41) begrenzten Ringspalt (43) gebildet ist.

5. Vorgesteuertes Ventil nach einem der Ansprüche 1 bis 3, dadurch **gekennzeichnet,** daß der erste Drosselquerschnitt durch eine im Ventilkörper (22) ausgebildete vorzugsweise zentral angeordnete Öffnung (32) gebildet ist.

6. Vorgesteuertes Ventil nach Anspruch 4 oder 5, dadurch **gekennzeichnet,** daß dem ersten Drosselquerschnitt ein Filterelement (29) vorgeschaltet ist.

7. Vorgesteuertes Ventil nach Anspruch 1, dadurch **gekennzeichnet**, daß der radial außenliegende ringförmige Randbereich der Platte (28) als Biegefeder (30) ausgebildet ist.

8. Vorgesteuertes Ventil nach einem der vorhergehenden Ansprüche, dadurch **gekennzeichnet,** daß der Vorsteuerkörper (14) auf einer Biegefeder (25) aufgehängt ist, die im Ventilgehäuse (35) eingespannt ist.

9. Vorgesteuertes Ventil nach Anspruch 4, dadurch **gekennzeichnet**, daß im Bereich des ersten Drosselquerschnitts (43) eine Ringnut (44) vorgesehen ist.

10. Vorgesteuertes Ventil nach Anspruch 1, dadurch **gekennzeichnet,** daß die Platte (28) sowohl im Wirkungsbereich eines die erste hydraulische Verbindung steuernden Dichtsitzes (39) als auch im Wirkungsbereich des Vorsteuerkörpers (14) ringförmige Vorsprünge aufweist.

11. Vorgesteuertes Ventil nach einem der vorhergehenden Ansprüche, dadurch **gekennzeichnet,** daß der mit dem Ventilkörper (22) zusammenwirkende Bereich des Vorsteuerkörpers (14) eine Steuerkante (21) bildet, die im Querschnitt dreieckförmig ausgebildet ist.

12. Vorgesteuertes Ventil nach einem der vorhergehenden Ansprüche, dadurch **gekennzeichnet,** daß der mit dem Ventilkörper (22) zusammenwirkende Bereich des Vorsteuerkörpers (14) eine mit dem im Vorsteuerraum (23) herrschenden Druck beaufschlagte Fläche (45) aufweist.

13. Vorgesteuertes Ventil nach Anspruch 11, dadurch **gekennzeichnet,** daß der Vorsteuerkörper (14) druckausgeglichen ist.

14. Vorgesteuertes Ventil nach einem der vorhergehenden Ansprüche , dadurch **gekennzeichnet,** daß ein mit dem Vorsteuerkörper (14) zusammenwirkendes, vorzugsweise zylindrisches Teil (47) vorgesehen ist, dessen Stirnfläche mit dem im Vorsteuerraum (23) herrschenden Druck beaufschlagbar ist.

15. Vorgesteuertes Ventil nach Anspruch 1, dadurch **gekennzeichnet,** daß der elektromagnetische Wandler (20) durch eine mit einem Permanentmagneten (17) zusammenwirkende Tauchspule (15) gebildet ist, deren Träger (19) den Vorsteuerkörper (14) bildet.

16. Vorgesteuertes Ventil nach Anspruch 1, dadurch **gekennzeichnet**, daß der elektromechanische Wandler (20) als ein bidirektional wirkender Linearmotor ausgeführt ist, dessen Anker (48) hülsenförmig ausgebildet und in einer Gleitbuchse (49) so gelagert ist, daß zwischen seinen Enden und dem Führungsteil (11) bzw. einer das Ventilgehäuse (35) verschließenden Polplatte (50) Axialluftspalte (51,88) ausgebildet sind.

17. Vorgesteuertes Ventil nach Anspruch 16, dadurch **gekennzeichnet,** daß die Axialluftspalte (51,88) in radialer Richtung stufenförmig gestaltet sind.

18. Vorgesteuertes Ventil nach Anspruch 16 oder 17, dadurch **gekennzeichnet**, daß in dem vom Anker (48) radial begrenzten Raum zwei durch einen Polschuh (52) voneinander getrennte, axial magnetisierte Permanentmagnete (53,54) angeordnet sind, von denen der eine an der Polplatte (50) und der andere am Führungsteil (11) anliegt, wobei zwischen dem Polschuh (52) und dem Anker (48) ein Radialluftspalt (55) ausgebildet ist.

19. Vorgesteuertes Ventil nach einem der Ansprüche 16 bis 18, dadurch **gekennzeichnet,** daß der Anker (18) mit dem Vorsteuerkörper (14) mittels durch das Führungsteil (11) hindurch sich erstreckender Verbindungsstifte (56) verbunden ist.

20. Vorgesteuertes Ventil nach Anspruch 1, dadurch **gekennzeichnet**, daß der elektromechanische Wandler (20) als Doppelhubmagnet ausgeführt ist, dessen Anker (57) mit ihn radial umgreifenden Spulen (58,59), je einer Polplatte (60,61) sowie einem dazwischen angeordneten Polschuh (62) zusammenwirkt, die in axialer Richtung nebeneinander angeordnet sind.

21. Vorgesteuertes Ventil nach Anspruch 20, dadurch **gekennzeichnet,** daß die Spulen (58,59) zwei axial entgegengesetzt magnetisierte, ringförmige Permanentmagnete (63,64) radial umgreifen, wobei der Anker (57) zwischen den Permanentmagneten (63,64) angeordnet ist.

22. Vorgesteuertes Ventil nach Anspruch 1, dadurch **gekennzeichnet**, daß der elektromechanische Wandler (20) als Doppelhubmagnet ausgeführt ist, dessen Anker (65) als eine zylindrische Hülse (66) ausgebildet ist, wobei die Anordnung seiner Spulen (67,68) derart getroffen ist, daß die eine Spule (67) radial außerhalb und die andere Spule (68) radial innerhalb der Hülse (66) angeordnet sind.

23. Vorgesteuertes Ventil nach Anspruch 22, dadurch **gekennzeichnet,** daß die Hülse (66) an ihren Enden mit dem Führungsteil (11) bzw. einer mit der radial innenliegenden Spule (68) zusammenwirkenden Polplatte (69) Axialluftspalte (70,89) bildend, auf einer Biegefeder (71) aufgehängt ist.

24. Vorgesteuertes Ventil nach Anspruch 22 oder 23, dadurch **gekennzeichnet,** daß die Hülse (66) zwischen an den Spulen (67,68) radial anliegenden Polkernen (72,73) angeordnet ist und mit ihnen Radialluftspalte (74,75) bildet .

25. Vorgesteuertes Ventil nach Anspruch 1, dadurch **gekennzeichnet,** daß der Vorsteuerkörper (14) mit einer Meßeinrichtung (76) gekoppelt ist, die seinen Betätigungsweg erfaßt.

26. Vorgesteuertes Ventil nach Anspruch 14 und 25, dadurch **gekennzeichnet,** daß der Vorsteuerkörper (14) mit der Meßeinrichtung (76) mittels des zylindrischen Teiles (47) gekoppelt ist.

27. Vorgesteuertes Ventil nach Anspruch 25, dadurch **gekennzeichnet,** daß die Meßeinrichtung (76) Änderungen von magnetischen Größen erfaßt, die durch die Verstellung des Vorsteuerkörpers (14) hervorgerufen werden.

28. Vorgesteuertes Ventil nach Anspruch 27, dadurch **gekennzeichnet,** daß die Meßeinrichtung (76) durch einen am Vorsteuerkörper (14) bzw. einem mit ihm verbundenen Teil (47) angebrachten Permanentmagneten (77) sowie ein sein Magnetfeld registrierendes Sensorelement (78) gebildet ist.

29. Vorgesteuertes Ventil nach Anspruch 28, dadurch **gekennzeichnet,** daß das Sensorelement (78) durch ein magnetoresistives Element gebildet ist.

30. Vorgesteuertes Ventil nach Anspruch 28, dadurch **gekennzeichnet,** daß das Sensorelement (78) durch ein Hallelement gebildet ist.

31. Vorgesteuertes Ventil nach Anspruch 25, dadurch **gekennzeichnet,** daß die Meßeinrichtung durch eine Reflexlichtschranke gebildet ist.

32. Vorgesteuertes Ventil nach Anspruch 25, dadurch **gekennzeichnet,** daß die Meßeinrichtung als eine nach dem Wirbelstromprinzip arbeitende Anordnung ausgebildet ist.

## Claims

1. A pilot valve (10) for suspension control systems including a valve housing (35), a valve member (22) incorporated therein which controls a first hydraulic connection between a first (8) and a second (33) hydraulic chamber, and a second hydraulic connection which is formed of a first throttling cross-section (32), a pilot chamber (23) and a variable second throttling cross-section (21, 22) controlled by a pilot member (14) interacting with the valve member (22) and adapted to be infinitely variably positioned by means of an electromechanical transducer (20),
**characterised** in that the pilot member (14) has an annular design so that fluid discharges from the pilot chamber (23) in a radial direction, and in that the valve member (22) is a resiliently suspended plate (28).

2. A pilot valve as claimed in claim 1,
**characterised** in that the pilot member (14) is guided on a preferably cylindrical guide element (11) which is fixedly arranged in the valve housing (35).

3. A pilot valve as claimed in claim 2,
**characterised** in that the guide element (11) includes radial pressure relief grooves (27) which open into a slot (26) formed between the pilot member (14) and the guide element (11).

4. A pilot valve as claimed in claim 2 or claim 3,
**characterised** in that the valve member (22) has an opening (42) which receives an axial cylindrical extension (41) of the guide element (11), wherein the first throttling cross-section is formed by the annular slot (43) confined between the valve member (22) and the extension (41).

5. A pilot valve as claimed in any one of claims 1 to 3,
**characterised** in that the first throttling cross-section is formed by an opening (32) in the valve member (22) which is preferably arranged centrally.

6. A pilot valve as claimed in claim 4 or claim 5,
**characterised** in that a filter element (29) is connected upstream of the first throttling cross-section.

7. A pilot valve as claimed in claim 1,
**characterised** in that the radially outwardly disposed annular fringe area of the plate (28) is provided as a bending spring (30).

8. A pilot valve as claimed in any one of the preceding claims,
**characterised** in that the pilot member (14) is suspended on a bending spring (25) compressed in the valve housing (35).

9. A pilot valve as claimed in claim 4,
**characterised** in that an annular groove (44) is provided proximate the first throttling cross-section (43).

10. A pilot valve as claimed in claim 1,
**characterised** in that the plate (28) has annular projections both in the range of effect of a sealing seat (39), controlling the first hydraulic connection, and in the range of effect of the pilot member (14).

11. A pilot valve as claimed in any one of the preceding claims,
**characterised** in that the area of the pilot member (14) which interacts with the valve member (22) forms a control edge (21) of a triangular cross-section.

12. A pilot valve as claimed in any one of the preceding claims,
**characterised** in that the area of the pilot member (14) interacting with the valve member (22) has a surface (45), to which the pressure prevailing in the pilot chamber (23) is applied.

13. A pilot valve as claimed in claim 11,
**characterised** in that the pilot member (14) is pressure-balanced.

14. A pilot valve as claimed in any one of the preceding claims,
**characterised** in that a preferably cylindrical part (47), interacting with the pilot member (14), is provided, the end surface of which may be subjected to the pressure prevailing in the pilot chamber (23).

15. A pilot valve as claimed in claim 1,
**characterised** in that the electromechanical transducer (20) is formed by a plunger coil (15), which interacts with a permanent magnet (17), and the carrier (19) of which forms the pilot member (14).

16. A pilot valve as claimed in claim 1,
**characterised** in that the electromechanical transducer (20) is a bidirectional linear motor, the armature (48) of which is of sleeve-shaped design and mounted in a sliding bushing (49) such that axial air slots (51, 88) are provided between its ends and the guide element (11) or a pole plate (50) which closes the valve housing (35).

17. A pilot valve as claimed in claim 16,
**characterised** in that the axial air slots (51, 88) are of stepped design in a radial direction.

18. A pilot valve as claimed in claim 16 or claim 17,
**characterised** in that the chamber, bounded radially by the armature (48), accommodates two axially magnetised permanent magnets (53, 54) which are separated by a pole shoe (52), one of the permanent magnets abutting against the pole plate (50), while the other one abuts against the guide element (11), a radial air slot (55) being provided between the pole shoe (52) and the armature (48).

19. A pilot valve as claimed in any one of the claims 16 to 18,
**characterised** in that the armature (18) is connected to the pilot member (14) by means of connecting pins (56) which extend through the guide element (11).

20. A pilot valve as claimed in claim 1,
**characterised** in that the electromechanical transducer (20) is a double lifting magnet, the armature (57) of which cooperates with coils (58, 59) radially embracing the armature, one pole plate (60, 61) each and a pole shoe (62) interposed in between, all elements being arranged side by side in an axial direction.

21. A pilot valve as claimed in claim 20,
**characterised** in that the coils (58, 59) radially embrace two annular permanent magnets (63, 64), magnetised in axially opposite directions, the armature (57) being interposed between the permanent magnets (63, 64).

22. A pilot valve as claimed in claim 1,
**characterised** in that the electromechanical transducer (20) is arranged as a double lifting magnet, the armature (65) of which is provided as a cylindrical sleeve (66), its coils (67, 68) being arranged such that one coil (67) is positioned radially outside the sleeve (66), while the other coil (68) is positioned radially inside the sleeve (66).

23. A pilot valve as claimed in claim 22,
**characterised** in that the sleeve (66) is suspended on a bending spring (71), the ends of the sleeve forming axial air slots (70, 89) with the guide element (11) or a pole plate (69) which interacts with the radially inwardly disposed coil (68).

24. A pilot valve as claimed in claim 22 or claim 23,
**characterised** in that the sleeve (66) is interposed between pole cores (72, 73), which are radially abutted against the coils (67, 68), and forms radial air slots (74, 75) with the pole cores.

25. A pilot valve as claimed in claim 1,
**characterised** in that the pilot member (14) is connected to a measuring device (76) which senses its actuating travel.

26. A pilot valve as claimed in claims 14 and 25,
**characterised** in that the pilot member (14) is connected to the measuring device (76) by the cylindrical part (47).

27. A pilot valve as claimed in claim 25,
**characterised** in that the measuring device (76) senses variations in magnetic variables which are caused by the shift in position of the pilot member (14).

28. A pilot valve as claimed in claim 27,
**characterised** in that the measuring device (76) is formed of a permanent magnet (77) fitted to the pilot member (14) or a part (47) connected to it, and a sensor element (78) recording the magnetic field of the permanent magnet.

29. A pilot valve as claimed in claim 28,
**characterised** in that the sensor element (78) is a magnetoresistive element.

30. A pilot valve as claimed in claim 28,
**characterised** in that the sensor element (78) is formed from a Hall effect element.

31. A pilot valve as claimed in claim 25,
**characterised** in that the measuring device is formed from a reflecting light barrier.

32. A pilot valve as claimed in claim 25,
**characterised** in that the measuring device is an arrangement working by the eddy-current principle.

## Revendications

1. Valve pilotée (10), pour système de régulation de dispositif de déplacement, comprenant un boîtier de valve (35), un obturateur (22), disposé dans ce boîtier de valve et commandant une première liaison hydraulique réalisée entre une première chambre hydraulique (8) et une seconde chambre hydraulique (33), et une seconde liaison hydraulique qui est constituée d'une première section transversale d'étranglement (32), d'une chambre de pilotage (23) et d'une seconde section transversale d'étranglement (21, 22) variable et commandée au moyen d'un corps de pilotage (14) qui est agencé de façon à pouvoir être positionné d'une manière continue à l'aide d'un convertisseur électromécanique (20) et qui coopère avec l'obturateur (22), caractérisée en ce que le corps de pilotage (14) a une forme annulaire, de sorte qu'un écoulement de sortie hors de la chambre de pilotage (23) s'effectue suivant la direction radiale, et en ce que l'obturateur (22) est réalisé en forme de plaquette (28) à suspension élastique.

2. Valve pilotée suivant la revendication 1, caractérisée en ce que le corps de pilotage (14) est guidé sur une pièce de guidage (11), de préférence cylindrique, qui est disposée d'une manière fixe dans le boîtier de valve (35).

3. Valve pilotée suivant la revendication 2, caractérisée en ce qu'il est prévu, dans la partie de guidage (11), des gorges radiales de détente de pression (27) qui s'ouvrent dans un intervalle (26) réalisé entre le corps de pilotage (14) et la pièce de guidage (11).

4. Valve pilotée suivant la revendication 2 ou 3, caractérisée en ce que l'obturateur (22) comporte une ouverture (42) qui sert à loger une partie cylindrique axiale (41) de prolongement de la pièce de guidage (11), tandis que la première section transversale d'étranglement est formée par l'intervalle annulaire (43) délimité entre l'obturateur (22) et la partie de prolongement (41).

5. Valve pilotée suivant l'une des revendications 1 à 4, caractérisée en ce que la première section transversale d'étranglement consiste en une ouverture (32), de préférence à disposition centrale. qui est réalisée dans l'obturateur (22).

6. Valve pilotée suivant la revendication 4 ou 5. caractérisée en ce qu'un élément de filtre (29) est disposé en amont de la première section transversale d'étranglement.

7. Valve pilotée suivant la revendication 1. caractérisée en ce que la zone marginale annulaire de la plaquette (28) qui est située radialement à l'extérieur est réalisée sous forme d'un ressort de flexion (30).

8. Valve pilotée suivant l'une des revendications précédentes, caractérisée en ce que le corps de pilotage (14) est suspendu à un ressort de flexion (25) qui est maintenu serré dans le boîtier de valve (35).

9. Valve pilotée suivant la revendication 4, caractérisée en ce qu'une gorge annulaire (44) est prévue dans la zone de la première section transversale d'étranglement (43).

10. Valve pilotée suivant la revendication 1, caractérisée en ce que la plaquette (28) comporte des parties en saillie annulaires aussi bien dans la zone d'action d'un siège d'étanchéité (39) commandant la première liaison hydraulique que dans la zone d'action du corps de pilotage (14).

11. Valve pilotée suivant l'une des revendications précédentes, caractérisée en ce que la partie du corps de pilotage (14) qui coopère avec l'obturateur (22) forme une arête de commande (21) dont la section transversale est triangulaire.

12. Valve pilotée suivant l'une quelconque des revendications précédentes, caractérisée en ce que la partie du corps de pilotage (14) qui coopère avec l'obturateur (22) comporte une surface (45) qui est soumise à la pression régnant dans la chambre de pilotage (23).

13. Valve pilotée suivant la revendication 11, caractérisée en ce que le corps de pilotage (14) est équilibré en pression.

14. Valve pilotée suivant l'une quelconque des revendications précédentes. caractérisée en ce qu'il est prévu une pièce (47), de préférence cylindrique, qui coopère avec le corps de pilotage (14) et dont la surface frontale est agencée de façon à pouvoir être soumise à la pression régnant dans la chambre de pilotage (23).

15. Valve pilotée suivant la revendication 1, caractérisée en ce que le convertisseur électromagnétique (20) est constitué d'une bobine mobile (15) qui coopère avec un aimant permanent (17) et dont le support (19) forme le corps de pilotage (14).

16. Valve pilotée suivant la revendication 1, caractérisée en ce que le convertisseur électromécanique (20) est réalisé sous forme d'un moteur linéaire à action bidirectionnelle dont l'armature mobile (48) a une forme de manchon et est montée dans une bague de glissement (49) d'une façon telle que des entrefers axiaux (51, 88) sont réalisés entre ses extrémités et respectivement la pièce de guidage (11) et une plaque polaire (50) fermant le boîtier de valve (35).

17. Valve pilotée suivant la revendication 16, caractérisée en ce que les entrefers axiaux (51, 88) ont une forme étagée suivant la direction radiale.

18. Valve pilotée suivant la revendication 16 ou 17, caractérisée en ce qu'il est prévu, disposés dans l'espace délimité radialement par l'armature mobile (48), deux aimants permanents (53, 54), aimantés suivant la direction axiale. qui sont séparés l'un de l'autre par une pièce polaire (50) et dont l'un prend appui sur la plaque polaire (50) et l'autre sur la pièce de guidage (11), un entrefer radial (55) étant formé entre la pièce polaire (52) et l'armature mobile (48).

19. Valve pilotée suivant l'une des revendications 16 à 18, caractérisée en ce que l'armature mobile (18) est reliée au corps de pilotage (14) au moyen de tiges de liaison (56) qui traversent la pièce de guidage (11).

20. Valve pilotée suivant la revendication 1, caractérisée en ce que le convertisseur électromécanique (20) est réalisé sous forme d'un électro-aimant à double course dont l'armature mobile (57) coopère avec des bobines (58. 59) qui l'entourent radialement, avec une plaque polaire (60, 61) associée à chaque bobine et avec une pièce polaire (62) qui est disposée entre ces bobines, ces bobines, plaque polaire et pièce polaire étant juxtaposées suivant la direction axiale.

21. Valve pilotée suivant la revendication 20, caractérisée en ce que les bobines (58, 59) entourent radialement deux aimants permanents (63, 64) annulaires qui sont aimantés dans des sens opposés suivant la direction axiale, tandis que l'armature mobile (57) est disposée entre ces aimants permanents (63, 64).

22. Valve pilotée suivant la revendication 1, caractérisée en ce que le convertisseur électromécanique (20) est réalisé sous forme d'un électro-aimant double course dont l'armature mobile (65) est réalisée sous forme d'un manchon cylindrique (66), tandis que l'agencement de ses bobines (67, 68) est tel qu'une première bobine (67) est disposée radialement à l'extérieur du manchon (66) et l'autre bobine (68) radialement à l'intérieur de cette bobine (66).

23. Valve pilotée suivant la revendication 22, caractérisée en ce que le manchon (66) est suspendu à un ressort de flexion (71), en formant, à ses extrémités, des entrefers axiaux (70, 89) respectivement avec la pièce de guidage (11) et avec une plaque polaire (69) qui coopère avec la bobine (68) située radialement à l'intérieur.

24. Valve pilotée suivant la revendication 22 ou 23, caractérisée en ce que le manchon (66) est disposé entre des noyaux polaires (72, 73) qui prennent appui radialement sur les bobines (67, 68) et il forme des entrefers radiaux (74, 75) avec ces noyaux polaires.

25. Valve pilotée suivant la revendication 1, caractérisée en ce que le corps de pilotage (14) est couplé à un dispositif de mesure (76) qui détecte sa course d'actionnement.

26. Valve pilotée suivant les revendications 14 et 25, caractérisée en ce que le corps de pilotage (14) est couplé au dispositif de mesure (76) au moyen de la pièce cylindrique (47).

27. Valve pilotée suivant la revendication 25, caractérisée en ce que le dispositif de mesure (76) détecte des variations de grandeurs magnétiques qui sont dues au déplacement du corps de pilotage (14).

28. Valve pilotée suivant la revendication 27, caractérisée en ce que le dispositif de mesure (76) est formé d'un aimant permanent (77), monté sur le corps de pilotage (14) ou sur une pièce (47) reliée à ce corps, et d'un élément de capteur (78) enregistrant son champ magnétique.

29. Valve pilotée suivant la revendication 28, caractérisée en ce que l'élément de capteur (78) est constitué d'un élément magnétorésistif.

30. Valve pilotée suivant la revendication 28, caractérisée en ce que l'élément de capteur (78) est constitué d'un élément Hall.

31. Valve pilotée suivant la revendication 25, caractérisée en ce que le dispositif de mesure est constitué d'un barrage photoélectrique à réflexion.

32. Valve pilotée suivant la revendication 25, caractérisée en ce que le dispositif de mesure est réalisé sous forme d'un agencement fonctionnant suivant le principe des courants de Foucault.
